# FASCICULE DE BREVET EUROPEEN

(11) **EP 3 910 818 B1**
(45) Date de publication et mention de la délivrance du brevet: **23.11.2022**
(21) Numéro de dépôt: 21172709.4
(22) Date de dépôt: 07.05.2021
(51) Int. Cl.: H04B 7/185, G01S 1/68, H04W 56/00

(54) **PROCÉDÉ DE COLLECTE DE DONNÉES PAR SATELLITE**
VERFAHREN ZUR SAMMLUNG VON DATEN DURCH EINEN SATELLITEN
METHOD FOR COLLECTING DATA BY SATELLITE

(30) Priorité: 15.05.2020 FR 2004875
(43) Date de publication de la demande: 17.11.2021
(73) Titulaire: THALES, 92400 Courbevoie (FR)
(72) Inventeur: KHUREIM CASTIGLIONI, Shadi, 31100 Toulouse (FR); VAN WAMBEKE, Nicolas, 31100 Toulouse (FR); PEYROTTE, Christian, 31100 Toulouse (FR)
(74) Mandataire: Atout PI Laplace

(56) Documents cités:
- EP-A1- 3 185 032
- WO-A2-2009/009264
- CN-A- 110 474 971
- US-A1- 2008 191 863
- US-A1- 2009 121 931
- BIRKELAND ROGER ET AL: "An assessment of IoT via satellite: Technologies, Services and Possibilities CityFlow View project An assessment of IoT via satellite: Technologies, Services and Possibilities", INTERNATIONAL ASTRONAUTICAL CONGRESS , 30 octobre 2019 (2019-10-30), pages 21-25, XP055774136, Extrait de l'Internet: URL:https://www.researchgate.net/profile/R oger_Birkeland/publication/337464987_An_as sessment_of_IoT_via_satellite_Technologies _Services_and_Possibilities/links/5dd8ef21 458515dc2f45a365/An-assessment-of-IoT-via- satellite-Technologies-Services-and-Possib ilities.pdf [extrait le 2021-02-09]

## Description

### Domaine technique :

L'invention se situe dans le domaine de la collecte de données dans des systèmes de communication où les entités à mettre en relation ne sont pas nécessairement en visibilité radio l'une de l'autre, et plus particulièrement les systèmes de collecte de données par satellite pour objets connectés. Elle vise à définir un procédé permettant d'optimiser la capacité système et l'efficacité spectrale de ces systèmes de transmission.

### Technique antérieure :

L'invention se situe dans le cadre de la collecte par une plateforme spatiale ou aéroportée de données transmises par des balises, par exemple des objets connectés, généralement autonomes et ne disposant pas nécessairement d'antennes directives, vers un équipement central chargé de traiter les données avec lequel elles ne sont pas nécessairement en visibilité radio. Il s'agit principalement de communications à faible puissance et à très bas débit réalisées par des dispositifs autonomes ayant peu de données à transmettre. Parmi les applications possibles figurent par exemple des balises permettant de suivre le déplacement de véhicules, d'animaux, de personnes, des bouées permettant de modéliser des courants, et des capteurs de toutes sortes.

Une des manières permettant de collecter les données des balises consiste à s'appuyer sur des réseaux satellitaires. Les procédés de communication par satellite standards (comme par exemple le DVB-S, acronyme anglais pour Digital Video Broadcasting - Satellite) sont conçus pour offrir des services en temps réel et pour des grosses quantités de données. Ils sont donc surdimensionnés par rapport aux besoins des objets connectés, et mettent en œuvre des traitements complexes peu en phase avec le besoin de faible consommation et les faibles puissances de calcul des dispositifs au sol.

C'est pourquoi, dans l'état de l'art, les objets connectés disposent généralement d'un moyen de géolocalisation (du type balise GPS, acronyme anglais pour *Global Positioning System*, ou système global de positionnement) et d'éphémérides leur permettant de savoir, avec une précision moyenne, lorsqu'ils sont survolés par un satellite. Quand c'est le cas et qu'ils ont des données à transmettre, ils les envoient au satellite qui les collecte et les délivre à des équipements sol spécifiques. Le système dépend donc de la qualité des éphémérides. En outre, en fonction de la constellation, plusieurs satellites peuvent recevoir la même information en même temps (cas de plusieurs satellites en visibilité). Si le système ne le prévoit pas, il peut alors y avoir des doublons d'information sur les différents satellites d'une constellation, ce qui constitue un gaspillage des ressources.

Afin de limiter les interférences entre les transmissions des balises, les systèmes existants pour objets connectés font généralement usage de mécanismes distribués basés sur des processus stochastiques pour la gestion de l'accès à la ressource radio (mécanismes en contention de type « Aloha » ou « Slotted Aloha »). Cependant, cette approche a pour effet de limiter l'extensibilité des systèmes car la capacité du système s'effondre passé un certain seuil. C'est le phénomène connu de « *congestion collapse* », ou effondrement lié à la congestion, qui fait que la capacité de ces systèmes n'est que de 15 à 40% de la capacité théorique du canal. La gestion de la bande par des accès en contention est donc peu compatible avec le besoin de connectivité très soutenue.

En réponse aux problèmes de congestion, il est connu d'utiliser des mécanismes d'accès par répétition/annulation d'interférences, tels que le CRDSA (acronyme anglais pour *Contention Resolution Diversity Slotted ALOHA*), MuSCA (acronyme anglais pour *Multi-Slot Coded ALOHA*), ou MARSALA (acronyme anglais pour *Multi-replicA decoding using correlation baSed LocAlisAtion*). Il est également connu d'utiliser des mécanismes transmission en spectre étalé, l'étalement par code procurant une isolation relative aux interférences. Cependant, les débits des communications en spectre étalé sont faibles. En outre, ces solutions ne permettent pas de prioriser les terminaux entre eux et de contrôler les accès aux ressources. Ainsi, des terminaux sans contrat peuvent faire chuter la capacité globale du système. Ils ne permettent pas non plus d'adapter le débit des transmissions aux conditions opérationelles.

Le document EP3185032A1 divulgue un procédé de collecte de données dans un système de communications radiofréquences.

L'invention décrit un procédé permettant d'optimiser la capacité et l'efficacité spectrale pour des systèmes de collecte de données par satellite, s'inscrivant dans le domaine de l'accès multiple avec résolution des interférences de façon à maximiser la capacité du système, et sans limitation sur l'extensibilité du système. Le procédé proposé peut également permettre de prioriser les transmissions, de contrôler les accès, et d'adapter au mieux les débits des transmissions. Il est donc particulièrement adapté pour transmissions par satellite avec des objets connectés émettant à faible puissance.

### Résumé de l'invention :

A cet effet, la présente invention décrit un procédé de collecte de données dans un système de communications radiofréquences comprenant :
- au moins une plateforme spatiale ou aéroportée connaissant sa position, configurée pour transmettre avec un faisceau antennaire dont la largeur et l'orientation sont adaptables et comprenant des moyens de mémorisation de données, et
- au moins une balise configurée pour acquérir des données, la position de chaque balise étant connue d'au moins un parmi la balise concernée et la plateforme spatiale ou aéroportée,

Le procédé est caractérisé en ce qu'il comprend :
- une première étape au cours de laquelle la plateforme émet un signal d'activation avec un faisceau antennaire faiblement directif, auquel chaque balise souhaitant transmettre des données répond par une requête d'accès comprenant un identifiant,
- une deuxième étape de génération d'une table comprenant, pour chaque équipement ayant transmis une requête d'accès, une durée de visibilité par le dispositif de transmission, une bande de fréquence et une durée de transmission,
- une troisième étape de définition, à partir de la table générée lors de la deuxième étape, d'un plan de contrôle planifiant le séquencement des transmissions des équipements ayant émis une requête d'accès et les associant à des configurations de faisceau antennaire directif de la plateforme, et
- une quatrième étape comprenant :
   o la transmission, aux équipements ayant émis une requête d'accès, d'une information leur permettant de connaitre les instants auxquels ils peuvent transmettre, et
   o l'orientation d'un faisceau antennaire directif de la plateforme vers une ou plusieurs balises, l'envoi de données depuis lesdites une ou plusieurs balises vers la plateforme, et la mémorisation des données reçues par la plateforme, selon l'ordre et les configurations de faisceau antennaire définis par le plan de contrôle.

Dans un mode de réalisation, le procédé comprend en outre au moins une station sol de collecte de données, dans lequel :
- la première étape comprend en outre la transmission d'une requête d'accès comprenant un identifiant par chaque station sol recevant le signal d'activation, et
- lorsqu'une station sol transmet une requête d'accès pendant la première étape du procédé, la quatrième étape comprend en outre le transfert des données mémorisées par la plateforme vers la station sol avec un faisceau antennaire directif.

Dans un autre mode de réalisation, le procédé de collecte de données comprend en outre au moins une station sol de collecte de données, le procédé comprenant en outre une étape de transmission des données mémorisées par la plateforme vers la station sol par une liaison dédiée.

Dans un mode de réalisation du procédé selon l'invention, la requête d'accès émise par une balise lors de la première étape comprend en outre une position de la balise et au moins un parmi : une quantité de données à transmettre, un horodatage associé à la position de la balise, un niveau de priorité, un historique des positions de la balise et un indicateur de mécanisme d'acquittement.

Avantageusement, la requête d'accès émise lors de la première étape est modulée selon une technique d'étalement de spectre par répartition en code.

Dans un mode de réalisation du procédé selon l'invention, la table générée lors de la deuxième étape comprend en outre au moins un parmi : un niveau de priorité, un vecteur vitesse, une quantité de données à transmettre, un schéma de modulation et de codage, un débit et un indicateur de mécanisme d'acquittement.

Dans un mode de réalisation du procédé selon l'invention, le plan de contrôle généré lors de la troisième étape comprend en outre au moins un parmi : un nombre d'équipements associés à chaque configuration de faisceau antennaire directif, un ordre de service, une durée allouée, une bande de fréquence allouée, un schéma de modulation et de codage, et un indicateur de mécanisme d'acquittement.

Dans un mode de réalisation du procédé selon l'invention, les trois premières étapes sont répétées séquentiellement et la quatrième étape est mise en œuvre en parallèle des trois premières étapes.

Dans un mode de réalisation du procédé selon l'invention, les quatre étapes sont répétées séquentiellement.

L'invention décrit également un système de communications radiofréquence comprenant :
- au moins une plateforme spatiale ou aéroportée connaissant sa position configurée pour transmettre avec un faisceau antennaire dont la largeur et l'orientation sont adaptables et comprenant des moyens de mémorisation de données. Les éléments du système de communications étant configurés pour mettre en œuvre un procédé de collecte de données selon l'invention, et
- au moins une balise configurée pour acquérir des données, la position de chaque balise étant connue d'au moins un parmi ladite balise et la plateforme spatiale ou aéroportée.

Dans un mode de réalisation, le système comprend en outre au moins une station sol de collecte de données.

Avantageusement, la plateforme comprend une antenne active ou une antenne orientable mécaniquement dont la largeur du faisceau est ajustable ou une première antenne à faisceau faiblement directif et une deuxième antenne à faisceau directif orientable mécaniquement.

### Brève description des figures :

L'invention sera mieux comprise et d'autres caractéristiques, détails et avantages apparaîtront mieux à la lecture de la description qui suit, donnée à titre non limitatif, et grâce aux figures annexées qui suivent, données à titre d'exemple, parmi lesquelles :
- la figure 1 illustre le contexte opérationnel dans lequel vient s'inscrire le procédé de collecte de données selon l'invention ;
- la figure 2a représente le déroulement des étapes d'un mode de réalisation du procédé de collecte de données selon l'invention ;
- la figure 2b représente les phases principales d'un mode de réalisation du procédé de collecte de données selon l'invention, à la suite de la figure 2a ;
- la figure 3 illustre par le biais d'un exemple la première phase d'un mode de réalisation du procédé selon l'invention, à la suite de la figure 2b ;
- la figure 4a illustre par le biais d'un exemple le début du déroulement de la quatrième phase d'un mode de réalisation du procédé selon l'invention, à la suite de la figure 3 ;
- la figure 4b illustre par le biais d'un exemple la suite du déroulement de la quatrième phase d'un mode de réalisation du procédé selon l'invention, à la suite de la figure 4a ;
- la figure 4c illustre par le biais d'un exemple la suite du déroulement de la quatrième phase d'un mode de réalisation du procédé selon l'invention, à la suite de la figure 4b ;
- la figure 4d illustre par le biais d'un exemple la suite du déroulement de la quatrième phase d'un mode de réalisation du procédé selon l'invention, à la suite de la figure 4c ;
- la figure 5 illustre par le biais d'un exemple la première phase d'une nouvelle itération d'un mode de réalisation du procédé selon l'invention, à la suite de la figure 4d ;
- la figure 6a illustre par le biais d'un exemple le début du déroulement de la quatrième phase d'un mode de réalisation du procédé selon l'invention, à la suite de la figure 5 ;
- la figure 6b illustre par le biais d'un exemple la suite du déroulement de la quatrième phase d'un mode de réalisation du procédé selon l'invention, à la suite de la figure 6a ;
- la figure 6c illustre par le biais d'un exemple la suite du déroulement de la quatrième phase d'un mode de réalisation du procédé selon l'invention, à la suite de la figure 6b ;
- la figure 7 illustre par le biais d'un exemple la première phase d'une nouvelle itération d'un mode de réalisation du procédé selon l'invention, à la suite de la figure 6c ;
- la figure 8 illustre par le biais d'un exemple la quatrième phase d'une nouvelle itération d'un mode de réalisation du procédé selon l'invention, à la suite de la figure 7.

Des références identiques peuvent être utilisées dans des figures différentes lorsqu'elles désignent des éléments identiques ou comparables.

### Description détaillée :

L'invention porte sur procédé pour un système de collecte de données par satellite particulièrement adapté pour les transmissions faites par des objets connectés tels que des balises IoT (acronyme anglais pour *Internet of Things* ou internet des objets). Cependant, elle ne se limite pas aux objets connectés et peut s'appliquer de manière identique à tout émetteur (ou balise) radiofréquence pour lequel les standards de transmissions ne correspondent pas aux contraintes opérationnelles.

De même, si l'invention est particulièrement adaptée aux transmissions par satellites, en particulier par satellites LEO (acronyme anglais pour *Low Earth Orbit* ou satellite en orbite terrestre basse) ou MEO (acronyme anglais pour *Medium Earth Orbit* ou satellite en orbite terrestre moyen), qui peuvent parcourir la terre plusieurs fois par jour, elle s'applique de manière totalement identique lorsque l'équipement destiné à la collecte des données est une plateforme aéroportée, comme par exemple un avion, un drone ou un ballon. Pour des raisons de simplification, la suite de la description assimilera cependant la plateforme récupérant les données transmises par les balises à un satellite.

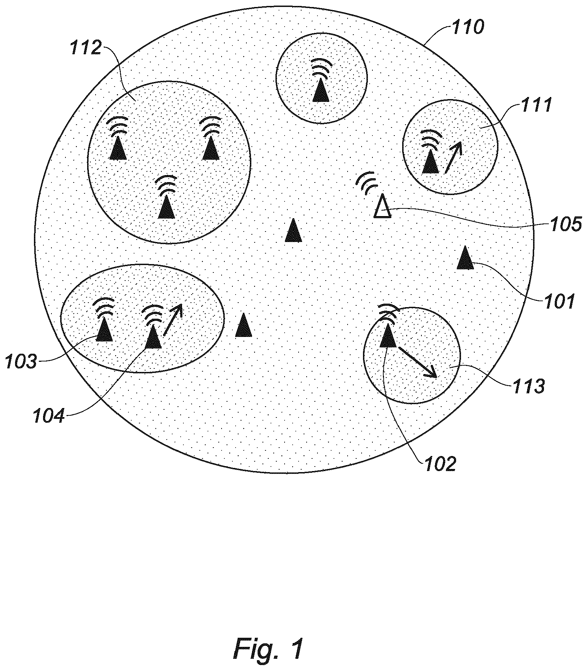

La figure 1 illustre le contexte opérationnel dans lequel vient s'inscrire le procédé de collecte de données selon l'invention. Il s'agit d'un système de communications impliquant un ou plusieurs satellites en mouvement et au moins une balise, ou objet connecté, positionnée au sol ou à faible altitude et configurée pour acquérir des données quelconques et les transmettre à un satellite. La position des balises est connue, soit parce qu'elles sont à des positions fixes, soit parce qu'elles sont équipées d'un moyen de géolocalisation, par exemple un récepteur GPS. Le satellite connait sa position et son vecteur vitesse. Il dispose d'une ou plusieurs antennes lui permettant d'adapter la largeur et l'orientation de son faisceau antennaire. Selon un mode de réalisation, l'antenne du satellite est une antenne active pour laquelle l'application d'une contrainte sur l'amplitude et la phase des différents éléments permet d'adapter la taille du faisceau (et donc le gain de l'antenne) et sa direction. Selon un autre mode de réalisation, l'antenne du satellite est une antenne orientable mécaniquement dont la largeur du faisceau est ajustable. Selon un autre mode de réalisation, le satellite dispose de deux antennes : une première antenne ayant un diagramme de rayonnement peu directif, et une deuxième antenne ayant un diagramme de rayonnement directif dont la direction est ajustable mécaniquement. L'antenne à diagramme de rayonnement peu directif est utilisée pour couvrir une zone géographique la plus large possible, typiquement de l'ordre de quelques centaines à quelques milliers de kilomètres pour un satellite en fonction de son altitude, ou de l'ordre de quelques kilomètres pour une plateforme aéroportée. L'antenne à diagramme de rayonnement directif est utilisée pour couvrir une zone géographique moins large, idéalement de l'ordre de quelques dizaines de kilomètres à quelques centaines de kilomètres pour un satellite en fonction de son altitude, ou de quelques dizaines de mètres pour une plateforme aéroportée mais avec un gain plus important. Avantageusement, le satellite peut disposer de plusieurs antennes directives (actives ou mécaniques) lui permettant de paralléliser les traitements.

Sur la figure 1, les références 101 à 105 représentent différentes balises d'un environnement opérationnel. Certaines balises peuvent être statiques (balises 101, 103 et 105) tandis que d'autres peuvent être mobiles (balise 102 et 104). Certaines peuvent avoir des données à transmettre (102, 103, 104 et 105), d'autres non (101). Enfin, certaines balises peuvent appartenir au système de communications (balises 101 à 104), tandis que d'autres n'en font pas partie (105).

Selon le mode de réalisation, un ou plusieurs des paramètres de transmission des balises (schéma de modulation et de codage, taille des paquets de données, bandes de fréquences) peuvent être fixes ou ajustables dynamiquement.

La référence 110 désigne la zone géographique couverte lorsque le satellite utilise un faisceau antennaire peu directif. Les références 111, 112 et 113 désignent différentes zones géographiques couvertes lorsque le satellite utilise un faisceau antennaire directif dont la direction est pilotable.

Le procédé selon l'invention permet d'améliorer les performances des systèmes de collecte de données existants en combinant un accès à la demande aux ressources fréquentielles et un plan de contrôle pour la formation de faisceaux et le transfert des données. Il permet ainsi de limiter, voire annuler, les collisions entre les communications réalisées par les balises, d'optimiser le bilan de liaison, le débit des transmissions et la durée en visibilité des terminaux.

Selon un mode de réalisation, le dispositif récupérant les données transmises par les balises est configuré pour conserver ces données en mémoire. Ce mode de réalisation est adapté par exemple au cas d'une plateforme aéroportée ayant une durée de mission limitée. Les données sont récupérées à la fin de la mission pour être exploitées. Dans un autre mode de réalisation, les données acquises depuis les balises sont transférées à une station sol. La station sol peut disposer des moyens permettant d'exploiter les données, ou être reliée par une liaison de données conventionnelle à un dispositif d'exploitation de ces données. Ce mode de réalisation est avantageux lorsque le dispositif recevant les données des balises est un satellite, ou lorsque le temps de latence des transmissions est important. La transmission des données vers la station sol peut être réalisée dans une bande de fréquence distincte de celle utilisée par les balises. Dans ce cas, elle peut être mise en œuvre indépendamment du procédé de collecte de données. De manière alternative, la transmission peut faire partie intégrante du procédé de collecte de données selon l'invention, et être intégrée au processus de réception des données émises par les balises.

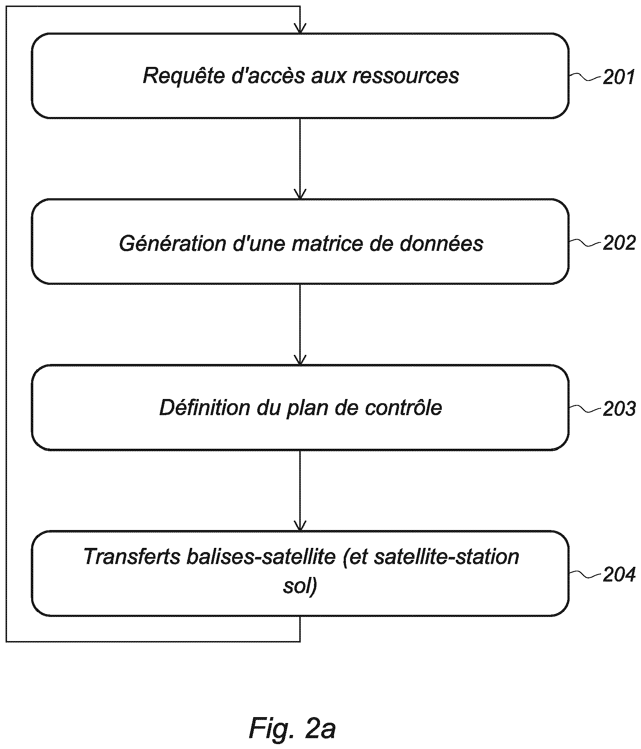

La figure 2a représente le déroulement des étapes d'un mode de réalisation du procédé de collecte de données selon l'invention. Le procédé selon l'invention comprend quatre phases principales :
- une première phase 201 au cours de laquelle les balises ayant des données à transmettre émettent une requête d'accès aux ressources,
- une deuxième phase 202 au cours de laquelle les besoins transmis sont analysés pour déterminer divers paramètres, en particulier la période de visibilité entre le satellite et les différentes balises,
- une troisième phase 203 au cours de laquelle est établi un plan de contrôle décrivant le séquencement des émissions des différentes balises, ainsi que les configurations antennaires associées,
- une quatrième phase 204 de transmission des données par les balises vers le satellite et de mémorisation de ces données dans le satellite.

Lorsque le système de collecte de données implique une station sol dont les transmissions sont intégrées aux transmissions des balises, la première phase est également réalisée par les stations sol, tandis que les deuxième et troisième phases prennent en compte la présence de station sol pour la génération du plan de contrôle. Enfin, la quatrième phase comprend la transmission des données mémorisées vers la station sol.

Dans le mode de réalisation représenté à la figure 2a, les quatre étapes 201 à 204 du procédé sont réalisées séquentiellement. La phase 4 peut être de durée variable, dimensionnée dynamiquement par rapport à la quantité de données à transmettre et au débit des transmissions, ou de durée fixe, ce qui permet de maitriser la durée totale du procédé et la fréquence de rafraîchissement de la génération du plan de contrôle. Dans ce mode de réalisation, une seule bande de fréquences est alors requise pour exécuter l'ensemble des étapes.

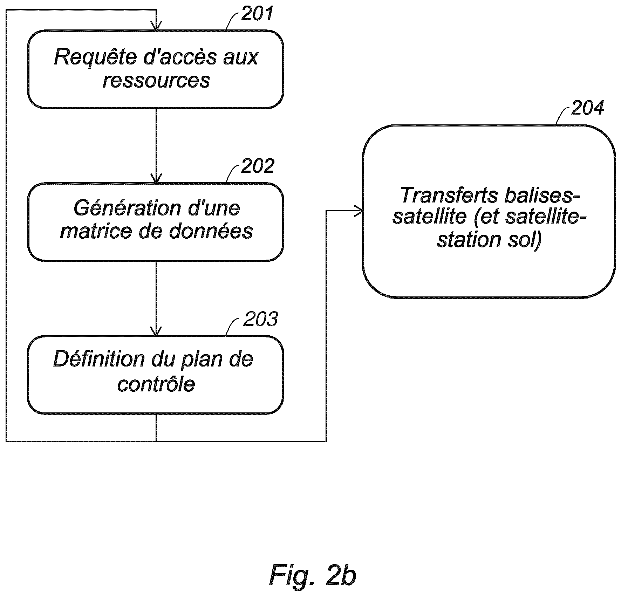

Selon un autre mode de réalisation, représenté à la figure 2b, les trois premières étapes du procédé 201 à 203 sont répétées à intervalles réguliers. La quatrième étape 204 est exécutée en parallèle, à partir du plan de contrôle calculé lors de l'itération précédente des trois premières étapes. Ce mode de réalisation requiert l'utilisation d'au moins deux antennes ayant des largeurs de faisceaux différentes : une pour l'étape 201, et une pour l'étape 204.

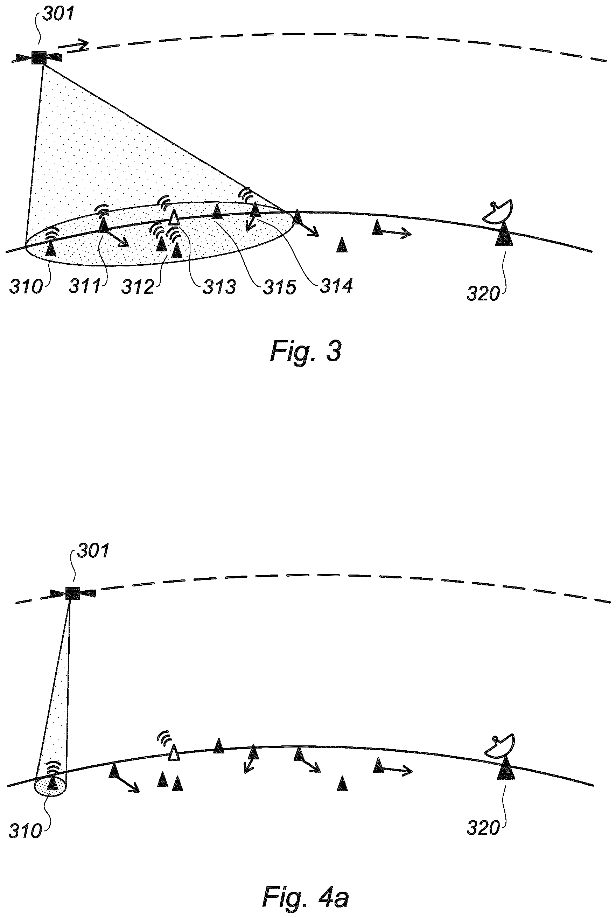

Les figures 3 à 8 illustrent par un exemple non limitatif le déroulement des différentes étapes du procédé de collecte de données selon l'invention. Cet exemple est établi par rapport à un cas opérationnel complexe impliquant une station sol dont les transmissions sont intégrées aux transmissions des balises. Le procédé s'applique une fois effectués les changements nécessaires lorsque le système ne dispose pas de stations sol, ou lorsque les transmissions vers la station sol se font par une liaison dédiée.

La figure 3 correspond à la première phase 201 du procédé, durant laquelle le satellite 301 utilise un faisceau antennaire peu directif de manière à couvrir la zone géographique la plus vaste possible. Dans l'exemple de la figure 3, il est en visibilité radio des balises 310 à 314, qui ont des données à transmettre, ainsi que de la balise 315, qui n'a pas de données à transmettre. Le satellite 301 et les balises 311 et 314 sont en mouvement. La balise 313 ne fait pas partie du système de communications.

Au cours de la première phase 201, le satellite envoie un signal informant les balises de sa présence en visibilité radio afin de les activer. Le signal peut être uniquement constitué de quelques bits permettant d'identifier le satellite et le type de message. Il est avantageusement transmis avec un schéma de modulation et de codage robuste, et dans une faible largeur de bande, ce qui permet de favoriser le bilan de liaison et de limiter la consommation d'énergie des balises veillant ce signal.

Lorsqu'elles reçoivent le signal, les balises ayant des données à transmettre répondent par une requête d'accès aux ressources radio. C'est le cas pour les balises 310 à 314. La requête d'accès comprend au moins un identifiant de la balise. Suivant le mode de réalisation, les balises peuvent être à un emplacement fixe connu du satellite. Leur position est alors obtenue à partir de cet identifiant, par exemple dans une table de correspondance téléchargée au préalable à bord du satellite et mise à jour lors de l'introduction/suppression de dispositifs dans le système de communications. Lorsqu'elles sont mobiles ou que le satellite ne connait pas leur position, les balises la transmettent dans la requête d'accès. Avantageusement, elles peuvent également transmettre une information concernant l'instant auquel la position a été calculée, et/ou un historique des dernières positions. Enfin, les balises peuvent transmettre une information concernant la priorité de leurs transmissions.

L'identifiant de la balise permet de reconnaitre et de filtrer les balises appartenant au système de communications, afin de fournir un service uniquement à celles-ci. Selon le mode de réalisation, il peut également permettre au satellite d'obtenir des informations sur le type de balise, en particulier ses capacités d'émission (type/modèle de balise, type d'antenne, puissance d'émission, schémas de modulation et de codage possible, taille des paquets de données, bandes de fréquences, utilisation d'un mécanisme d'acquittement des paquets de données...), toujours à partir de l'identifiant de la balise et d'une table de correspondance. Ces informations permettent par exemple d'établir un bilan de liaison. De manière alternative, ces informations peuvent être transmises par les balises dans la requête d'accès.

Lorsque le système de collecte de données comprend des stations sol dont les transmissions sont multiplexées avec les émissions des balises, les stations sol recevant le signal d'activation transmis par le satellite répondent également par une requête d'accès aux ressources radio. Cette requête peut ne contenir que l'identifiant de la station lorsque la position de celle-ci et ses capacités de transmission sont connues du satellite. Lorsque ce n'est pas le cas, l'identifiant de la station et/ou ses capacités de transmission peuvent être transmises dans la requête d'accès.

Les requêtes d'accès sont très brèves : elles peuvent donc être émises en utilisant un protocole d'accès aléatoire de type Aloha. Avantageusement, afin d'éviter les collisions, elles peuvent être émises en utilisant une technique d'étalement de spectre par répartition en code.

A l'issue d'une durée suffisante pour assurer la réception de toutes les requêtes d'accès, le procédé de collecte de données selon l'invention passe à la deuxième phase 202. Cette deuxième phase est mise en œuvre par le satellite à partir des données reçues lors de la première phase du procédé selon l'invention.

Dans un premier temps, le satellite recevant une requête d'accès peut utiliser l'identifiant de la balise ou de la station sol pour déterminer si elle appartient ou non au système de communications, afin de l'accepter ou de la rejeter.

Lorsque la requête d'accès est acceptée, le satellite utilise les données qu'elle contient pour définir (ou mettre à jour) une table regroupant l'ensemble des informations obtenues à l'issue de la première phase 201 du procédé, et calculer des informations pertinentes pour la mise en œuvre d'un plan de contrôle des transmissions.

Dans un mode de réalisation minimal, où les balises ne disposent pas de moyens de transmission ajustables (bande de fréquence, taille des paquets, durée d'envoi des messages, schéma de modulation et de codage, ....), les informations contenues dans la table peuvent être limitées à celles décrites dans la table 1 :

**[Table 1]**

| | Equipement 1 | Equipement 2 | Equipement 3 | ... |
|---|---|---|---|---|
| Identifiant | | | | |
| Type | | | | |
| Position | | | | |
| Direction | | | | |
| Durée de visibilité | | | | |
| Bande allouée | | | | |
| Durée allouée | | | | |

Le champ « Identifiant » est obtenu dans la requête d'accès.

Le champ « Type » correspond au type d'équipement ayant transmis la requête d'accès : balise ou station sol, associé avantageusement au modèle de l'équipement afin de faire le lien avec ses capacités d'émission. Il est obtenu à partir de la requête d'accès ou d'une table téléchargée à partir de l'identifiant de l'équipement. Ce champ n'est pas nécessaire lorsque le système ne comprend pas de station sol et/ou que les balises disposent toutes des mêmes capacités d'émission.

Le champ « Position » est obtenu à partir de la requête d'accès ou d'une table téléchargée à partir de l'identifiant de l'équipement.

Le champ « Direction » correspond à la directrice Satellite-Equipement (angles θ' et ϕ' par rapport à l'axe antenne), obtenue à partir de leurs positions respectives.

Le champ «Durée de visibilité » correspond à la durée durant laquelle l'équipement est visible par le satellite. La fenêtre de visibilité est obtenue en considérant la direction de l'équipement, l'angle de dépointage maximal de l'antenne du satellite et son vecteur vitesse.

Le champ « Bande allouée » est lié au type de balise, et donc obtenu dans la requête d'accès ou dans une table téléchargée à partir de l'identifiant de l'équipement.

Le champ « Durée allouée » est liée au type de balise, et donc obtenue dans la requête d'accès ou dans une table téléchargée à partir de l'identifiant de l'équipement.

Dans différents modes de réalisation, la table 1 peut être enrichie d'un ou plusieurs paramètres, représentés dans la table 2, qui permettent d'améliorer la précision et l'efficacité du procédé. Certains de ces paramètres sont liés entre eux, d'autres peuvent être mis en œuvre indépendamment.

**[Table 2]**

| | Equipement 1 | Equipement 2 | Equipement 3 | ... |
|---|---|---|---|---|
| Identifiant | | | | |
| Type | | | | |
| Position | | | | |
| Direction | | | | |
| Priorité | | | | |
| Horodatage | | | | |
| Historique des positions | | | | |
| Vecteur vitesse | | | | |
| Durée de visibilité | | | | |
| Quantité de données | | | | |
| Bilan de liaison | | | | |
| Modulation - Codage | | | | |
| Bande allouée | | | | |
| Débit | | | | |
| Durée allouée | | | | |
| Identifiant de faisceau | | | | |
| Acquittement | | | | |

Le champ « Priorité » correspond au niveau de priorité de la transmission. Il peut être obtenu dans la requête d'accès ou dans une table téléchargée à partir de l'identifiant de l'équipement.

Le champ « Horodatage » correspond à l'instant où a été acquise la position de la balise. Il est transmis dans la requête d'accès.

Le champ « Historique des positions » correspond aux dernières positions acquises par la balise, associées à un horodatage donnant l'heure à laquelle a été réalisée la mesure. L'historique peut être obtenu dans la requête d'accès, ou être entretenu par le satellite à partir des positions récupérées lors des itérations précédentes du procédé de collecte.

Le champ « Vecteur vitesse » correspond au vecteur vitesse de la balise, extrapolé à partir de l'historique des positions de la balise, ou transmis dans la requête d'accès. Avantageusement, le satellite peut connaître la vitesse maximum de déplacement de la balise afin de borner cette valeur.

Le champ «Quantité de données». Dans le cas d'une balise, ce champ correspond à la quantité de données que la balise doit transmettre au satellite. Il est obtenu à partir de la requête d'accès. Dans le cas d'une station sol, ce champ correspond à la quantité de données que le satellite doit transmettre à la station sol, obtenu à partir de la quantité de données en mémoire dans le satellite.

Le champ « Bilan de liaison » correspond au bilan de liaison entre le satellite et l'équipement considéré. Il est obtenu à partir de la distance entre le satellite et l'équipement, des caractéristiques de la l'équipement telles que sa puissance d'émission et son gain d'antenne (obtenus dans la requête d'accès, à partir du modèle de l'équipement ou dans une table téléchargée à partir de l'identifiant de l'équipement) et du gain de l'antenne directive du satellite. Il correspond à la marge du bilan de liaison.

Le champ « Modulation - Codage » correspond au schéma de modulation et de codage utilisé pour la transmission des données depuis la balise vers le satellite ou depuis le satellite vers la station sol. Lorsqu'il est fixe, il est obtenu dans la requête d'accès, à partir du modèle de l'équipement, ou dans une table téléchargée à partir de l'identifiant de l'équipement. Lorsqu'il est adaptable dynamiquement, il est déterminé en fonction du bilan de liaison, de manière à être le plus efficace possible tout en garantissant la bonne réception des données.

Le champ « Bande Allouée », lorsqu'il est variable, est obtenu à partir de la quantité de données à transmettre, de la durée en visibilité et du schéma de modulation et de codage.

Le champ « Débit », lorsqu'il est fixe, est obtenu dans la requête d'accès, à partir du modèle de l'équipement, ou dans une table téléchargée à partir de l'identifiant de l'équipement. Lorsqu'il est variable, il est donné par la largeur de bande allouée et le schéma de modulation et de codage.

Le champ « Durée allouée », lorsqu'il est fixe, est obtenu dans la requête d'accès, à partir du modèle de l'équipement, ou dans une table téléchargée à partir de l'identifiant de l'équipement. Lorsqu'il est variable, il est donné par la quantité de données à transmettre et le débit. Cette durée doit être inférieure à la durée en visibilité du satellite. Lorsque ce n'est pas le cas, le schéma de modulation et de codage, la largeur de bande de fréquence allouée ou la quantité de données à transmettre peuvent être modifiés, ou la quantité de données à transmettre réduite.

Lorsqu'ils sont adaptables dynamiquement, les paramètres « Bande Allouée », « Modulation/Codage », « Débit » et « Durée Allouée » sont liés. Ils peuvent donc être ajustés conjointement et de manière récursive.

Le champ « Acquittement » indique si les transmissions font l'objet ou non d'un mécanisme d'acquittement. Ce champ est obtenu dans la requête d'accès ou dans une table téléchargée à partir de l'identifiant de l'équipement considéré.

La table de données remplie lors de la deuxième phase 202 du procédé contient toutes les données utiles pour générer un plan de contrôle des transmissions depuis les balises, et vers les stations sol lorsqu'elles sont intégrées au système de collecte.

Le procédé selon l'invention comprend ensuite une troisième phase 203 de définition d'un plan de contrôle adaptatif à partir des informations récupérées lors de la deuxième phase 202 du procédé.

Le plan de contrôle planifie et ordonne le séquencement des émissions depuis les balises et vers les stations sol, et les associe à une configuration d'antenne. Cette étape est faite à partir des informations collectées lors de la deuxième phase du procédé, en particulier la durée en visibilité des balises/stations sol et les durées de transmissions, de manière à ce qu'un maximum de transmissions soient portées à leur terme. Avantageusement, le plan de contrôle prend également en compte le niveau de priorité des transmissions et le déplacement des balises (exprimé par leur vecteur vitesse).

Avantageusement, le plan de contrôle peut regrouper les transmissions au sein de faisceaux communs. En effet, un faisceau peut servir plusieurs balises lorsqu'elles sont assez proches et que les ressources temporelles et fréquentielles disponibles sont suffisantes, optimisant ainsi le pointage et facilitant les commutations de faisceau. Les balises sont regroupées au sein d'un même faisceau lorsqu'elles satisfont les conditions suivantes :
- elles se trouvent à l'intérieur d'un angle solide limité donné par la largeur du faisceau directif du satellite. Cette information est directement mesurable à partir des informations de direction θ' et ϕ', et éventuellement du déplacement du satellite et des balises,
- la durée en visibilité et la bande de fréquence allouées aux équipements est compatible d'un multiplexage temporel ou fréquentiel des transmissions.

La direction optimale de faisceau de l'antenne directive du satellite θ et ϕ est calculée pour chaque faisceau à partir de la position du satellite au moment où le faisceau sera actif, et lorsque c'est possible, du déplacement des balises. Lorsque le faisceau comprend plusieurs balises, cette direction est celle qui optimise la transmission et la durée de visibilité pour l'ensemble des balises desservies par le faisceau.

Lorsque l'antenne est une antenne active, l'angle d'ouverture de l'antenne, c'est-à-dire la forme et la directivité du faisceau antennaire, peuvent être adaptés pour optimiser la durée en visibilité des équipements. Dans ce cas, il peut être nécessaire de réajuster les paramètres tels que le schéma de modulation et de codage, le débit, la bande et la durée allouées. De même, lorsque c'est possible, l'ouverture de l'antenne peut être ajustée pour permettre le regroupement de balises au sein d'un même faisceau, et/ou pour éviter des transmissions réalisées par des balises n'appartenant pas au système de communications.

Le plan de contrôle ainsi calculé contient toutes les informations indispensables à la mise en œuvre des transmissions, regroupées par exemple sous la forme d'une table telle que la table 3. Les éléments marqués d'une étoile * sont optionnels. Les valeurs indiquées sont données uniquement à titre d'illustration.

**[Table 3]**

| Identifiant de faisceau | Faisceau 1 | Faisceau 2 | | Faisceau 3 |
|---|---|---|---|---|
| Nombre d'équipements | 1 | 2 | | 1 |
| Identifiant des équipements | B4 | B1 | B2 | B3 |
| Ordre de service | 1 | 2 | | 3 |
| Type | Balise | Balise | Balise | Balise |
| Direction - Loi A/φ | θ₁, φ₁ | θ₂, φ₂ | | θ₃, φ₃ |
| Durée alloué^{∗} | 2 sec | 2 sec | 2 sec | 1 sec |
| Bande allouée^{∗} | Toute | Moitié supérieure | Moitié inférieure | Toute |
| Modulation/Codage^{∗} | BPSK 1/3 | QPSK ½ | QPSK ½ | QPSK ½ |
| Acquittement^{∗} | Oui | Oui | Oui | Non |

Le plan de contrôle formalise le séquencement des transmissions, associé à des directions du faisceau de l'antenne directive du satellite. A minima, les éléments qu'il contient sont les suivants :
- le nombre d'équipements par faisceau et leurs identifiants,
- le type d'équipement (balise ou station sol) si le système de collecte comprend des stations sol,
- l'ordre de service, c'est-à-dire l'ordonnancement temporel des faisceaux. De manière alternative, le plan de contrôle peut être organisé selon l'ordre de service des faisceaux, comme c'est le cas à la table 3,
- la direction du faisceau - loi A/ ϕ : dans le cas d'une antenne pilotable mécaniquement, la direction est donnée par rapport à une orientation optimale du faisceau directif de l'antenne (θ, ϕ). Dans le cas d'une antenne active, cette direction est traduite en une loi de pointage A/ϕ appliquée aux éléments rayonnants de l'antenne du satellite. Cette loi dépend de la configuration de l'antenne, de la direction du faisceau et éventuellement de l'angle d'ouverture à 3dB.

Avantageusement, le plan de contrôle peut également comprendre une ou plusieurs informations parmi lesquelles :
- la durée allouée à la transmission,
- la bande allouée à la transmission, lorsqu'elle n'est pas fixe ou lorsqu'un multiplexage fréquentiel des transmissions est possible,
- le schéma de modulation et de codage,
- la mise en œuvre d'un mécanisme d'acquittement des paquets de données.

Dans le cas donné à titre d'illustration à la table 3, les balises B1 et B2 se voient attribuer la même durée dans des bandes de fréquences différentes au sein du même faisceau. Il s'agit donc d'un multiplexage fréquentiel. Les proportions de bandes attribuées à chacune des balises peuvent être ajustées en fonction des besoins et/ou des niveaux de priorité des transmissions. De manière alternative, dans le cas d'un multiplexage temporel, l'ensemble de la bande de fréquence peut être attribué successivement aux deux balises.

Le plan de contrôle établi lors de la troisième phase 203 du procédé selon l'invention est adapté à la durée de visibilité, à la priorité, et aux capacités d'adaptation de chaque équipement. Il permet donc d'optimiser la capacité de l'ensemble du système. Il peut être remis à jour à chaque itération du procédé.

Le procédé selon l'invention comprend une quatrième phase 204 au cours de laquelle sont réalisées les transmissions définies dans le plan de contrôle.

Le plan de contrôle doit être communiqué par le satellite aux différents équipements situés au sol afin qu'ils transmettent/reçoivent dans les intervalles temporels qui leur sont attribués. Différentes méthodes sont possibles. Une première méthode consiste à le transmettre à l'ensemble des équipements à la fin de chaque itération de la troisième phase du procédé 203, en utilisant le faisceau antennaire peu directif du satellite. Ce mode de réalisation minimise le nombre d'envois par le satellite mais nécessite une bonne synchronisation des balises. Dans une deuxième méthode, plus simple à mettre en œuvre, le satellite envoie aux balises une requête de transmission avec les informations du plan de contrôle relatives à cette transmission lorsque c'est à leur tour d'émettre, en utilisant le faisceau antennaire directif correspondant. La description qui suit se base sur ce mode de réalisation.

Les figures 4a à 4d illustrent le déroulement de la quatrième phase du procédé. Dans un premier temps, illustré à la figure 4a, le satellite 301 forme le premier faisceau directif listé dans le plan de contrôle en direction de la balise 310. Par le biais du faisceau directif formé, le satellite envoie à la balise une requête de transmission, comprenant le cas échéant des informations sur la durée allouée à la transmission, la bande de fréquence, le schéma de modulation et de codage, et/ou la mise en œuvre d'un mécanisme d'acquittement des paquets de données. En réponse à la requête de transmission, la balise 310 envoie ses données au satellite 301, qui les mémorise.

Lorsqu'un mécanisme d'acquittement est mis en œuvre, les paquets de données peuvent par exemple être suivies d'un champ EoM (acronyme anglais pour *End of Message,* ou fin de message). Lorsque le satellite reçoit le champ EoM à la fin d'un paquet de données, il sauvegarde les données et répond à la balise 310 par un message d'acquittement. La balise 310 peut alors supprimer les données de sa mémoire. En cas de transmission incomplète (absence de champ EoM), le satellite planifie un nouveau contact lors de la prochaine itération du procédé pour la suite de la transmission des données. De manière alternative, en cas de transmission incorrecte, le satellite peut transmettre un message de non acquittement à la balise, qui se prépare à réemettre le paquet concerné, et planifie un nouveau contact lors de la prochaine itération du procédé pour une nouvelle transmission des données. Avantageusement, les données à transmettre peuvent être découpées en paquets de données de tailles inférieures à la totalité des données à transmettre, chaque paquet étant terminé par un champ EoM. Ce mode de fonctionnement facilite la réexpédition des paquets.

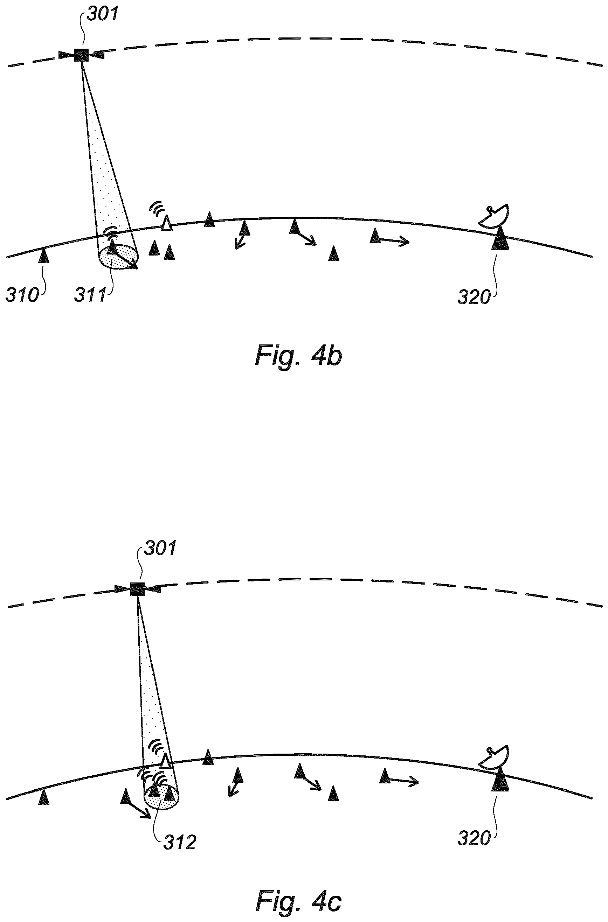

La figure 4b représente la suite de la quatrième phase du procédé selon un mode de réalisation de l'invention. Une fois les données de la balise 310 récupérées, le satellite modifie la direction de son faisceau directif de manière à le pointer vers la station 311, selon le séquencement défini dans le plan de contrôle. Le déplacement du satellite depuis la première phase du procédé est pris en compte par le plan de contrôle, de sorte que le faisceau de l'antenne directive du satellite est parfaitement focalisé vers la balise 311 lorsqu'elle transmet. En outre, lorsque le mode de réalisation le prévoit, le déplacement de la balise 311 est également pris en compte. Le satellite envoie une requête de transmission à la balise 311, qui répond avec les données à transmettre, avec ou sans mécanisme d'acquittement suivant la définition du plan de contrôle.

La figure 4c représente la suite de la quatrième phase du procédé selon un mode de réalisation de l'invention. Le satellite 301 dirige sont faisceau directif de manière à couvrir les deux balises désignées sous la référence 312, regroupées au sein du même faisceau suivant le séquencement du plan de contrôle. Dans le cas d'un multiplexage temporel au sein du faisceau, le mécanisme de requête/transmission des données est réalisé successivement avec chacune des balises avant leurs émissions. Dans le cas d'un multiplexage fréquentiel, le satellite 301 transmet une requête aux deux balises, qui y répondent simultanément dans la bande de fréquence définie par le plan de contrôle.

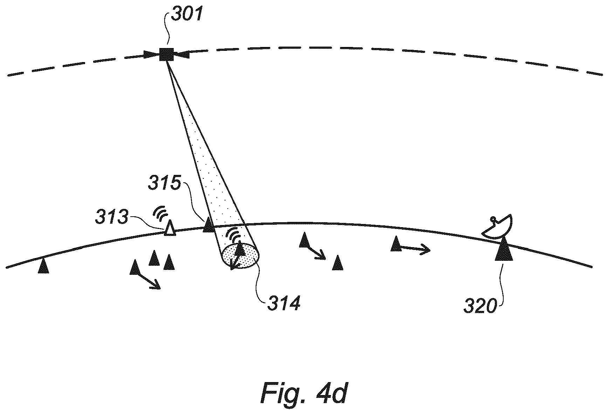

La figure 4d représente la fin de la quatrième phase du procédé selon un mode de réalisation de l'invention. Suivant le plan de contrôle, le satellite dirige son faisceau directif vers la balise 314, qui s'est déplacée par rapport à la position transmise durant la première phase 201 du procédé. Avantageusement, ce déplacement est anticipé grâce au calcul d'un vecteur vitesse de la balise lors de la deuxième phase 202, et est pris en compte lors de la définition du plan de contrôle afin d'orienter au mieux le faisceau directif de l'antenne vers la balise 314. Le mécanisme de requête/transmission est alors réalisé avec la balise 314.

On observe en particulier que, dans le procédé selon l'invention, la balise 315 qui ne dispose pas de données à transmettre, n'a pas été sollicitée et n'a donc pas dépensé d'énergie émettre. Le faisceau antennaire directif n'a jamais été orienté en direction de la balise 313, qui n'appartient pas au système de communications, réduisant ainsi naturellement les interférences liées aux émissions de cette balise grâce à la directivité du faisceau antennaire du satellite. On observe enfin que, pour des besoins de transmission et des niveaux de priorité égaux, le plan de contrôle affecte d'abord les ressources aux balises ayant la durée en visibilité la plus courte auprès du satellite.

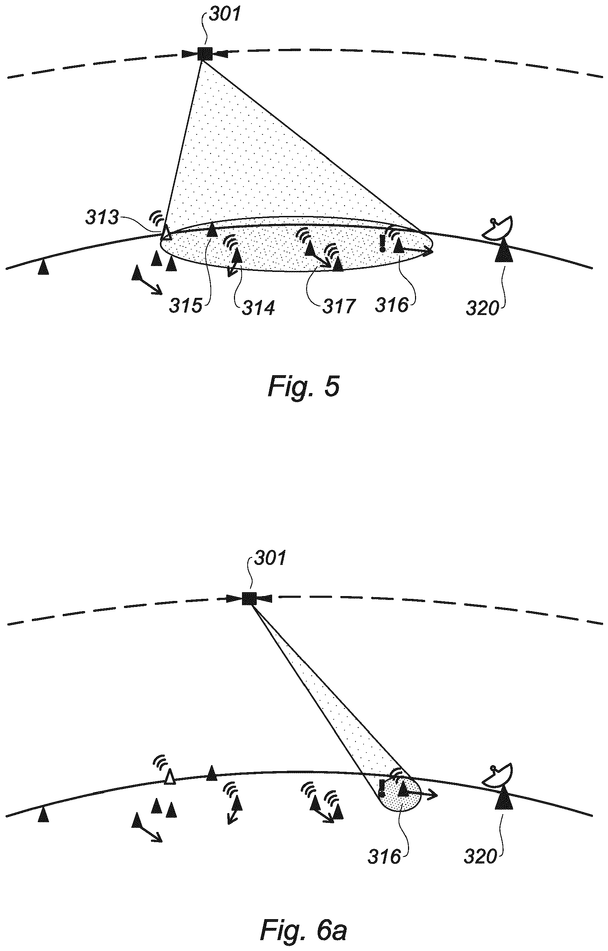

La figure 5 représente la première phase d'une nouvelle itération du procédé de collecte de données selon l'invention. Tout comme à la figure 3, le satellite transmet un signal informant les balises de sa présence en visibilité radio afin de les activer sur une zone géographique étendue grâce à son faisceau antennaire peu directif. Cette zone comprend la balise 313, qui n'appartient pas au réseau, la balise 314, qui a de nouvelles données à transmettre, la balise 315, qui n'a toujours pas de données à transmettre, la balise 316, disposant de données prioritaires à transmettre, ainsi que les deux balises désignées sous la référence 317, les deux balises ayant des données à transmettre, l'une d'elle se déplaçant.

A l'issue de cette première phase, au cours de laquelle les différentes balises répondent par une requête d'accès lorsqu'elles ont des données à transmettre, la deuxième phase 202, de définition d'une table d'informations concernant les équipements impliqués par de futures transmission, et la troisième phase 203 de définition d'un plan de contrôle, sont réalisées. La troisième phase prend en compte les niveaux de priorité relatifs des équipements, c'est pourquoi la balise 316 sera desservie de manière prioritaire par rapport aux autres bien que sa durée en visibilité soit supérieure.

Les figures 6a à 6c représentent la quatrième phase de la deuxième itération du procédé selon l'invention.

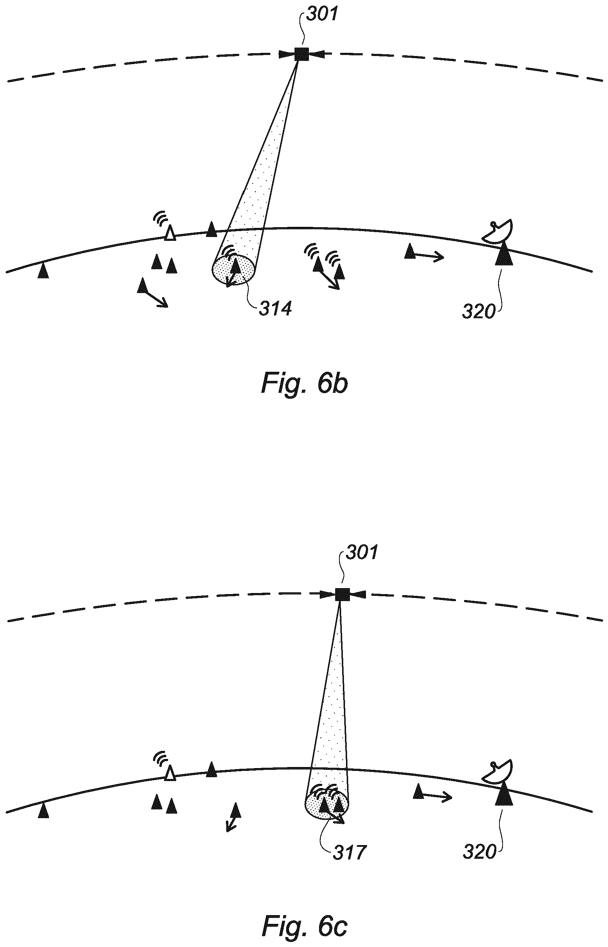

Comme représenté sur la figure 6a, le satellite 301 positionne dans un premier temps son faisceau directif en direction de la balise 316 ayant le plus haut niveau de priorité, conformément au plan de contrôle. Il transmet une requête de transmission, à laquelle la balise répond avec ses données, en mettant en œuvre le cas échéant un mécanisme d'acquittement des données. Conformément aux figures 6b et 6c, le satellite récupère ensuite successivement les données transmises par la balise 314 puis par les balises désignées sous la référence 317 partageant le même faisceau.

Lorsque le système de collecte de données ne s'appuie pas sur des stations sol, les étapes décrites en lien avec les figures 3 à 6c sont réitérées autant que nécessaire.

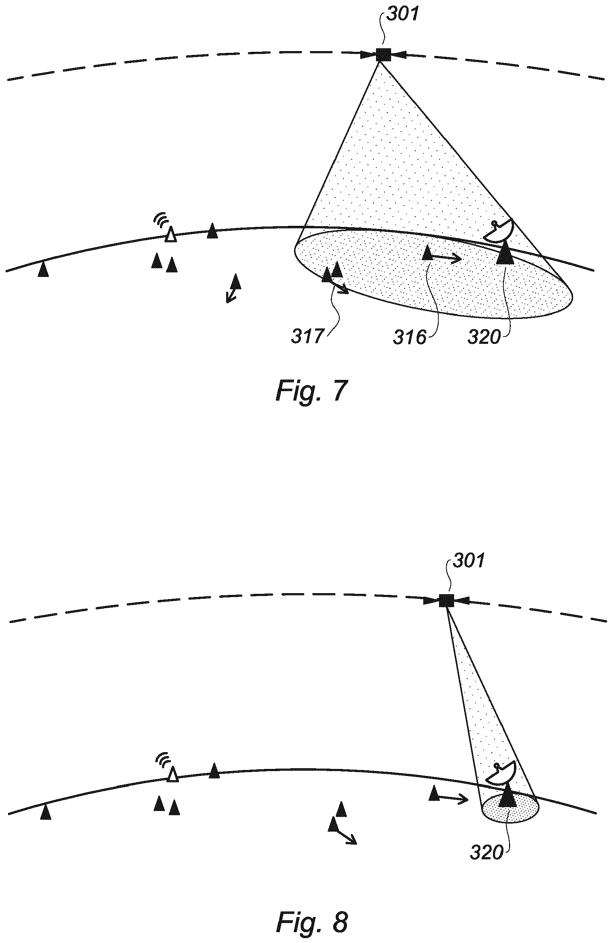

La figure 7 représente la première phase d'une nouvelle itération du procédé de collecte de données selon un mode de réalisation de l'invention, lorsque le système de collecte de données s'appuie sur une ou plusieurs stations sol, et où les transmissions avec la station sol se font par le même lien que les transmissions depuis les balises. Parmi la zone géographique couverte par le faisceau antennaire non directif du satellite se trouve la station sol 320. Au cours de la première phase 201 du procédé selon l'invention, le satellite 301 émet un signal informant les balises de sa présence en visibilité radio afin de les activer. Les balises ayant des données à transmettre et la station sol répondent à ce message. La station sol 320 est alors considérée pour le calcul du plan de contrôle lors de la deuxième phase 202 et de la troisième phase 203 du procédé.

Lorsque le lien vers la station de contrôle est assuré par une liaison de données distinctes, le signal transmis par le satellite lors de la première phase du procédé peut être utilisé pour déclencher la réception depuis la station sol.

La figure 8 représente la quatrième phase 204 de la troisième itération du procédé selon un mode de réalisation de l'invention. Un créneau est prévu dans le plan de contrôle pour que le satellite 301 transmette à la station sol 320 les données stockées en mémoire à l'aide de son faisceau antennaire directif.

Avantageusement, la station sol peut être traitée comme un équipement de priorité maximale, de manière à être la première servie, et à ce que l'ensemble des ressources lui soient dédiées. Cela permet de réduire la latence entre l'envoi des paquets de données par les balises et leur réception par la station sol, et de réduire au mieux l'occupation de la mémoire du satellite.

Le satellite supprime les données stockées dans sa mémoire une fois transmises. Lorsque les transmissions avec la station sol mettent en œuvre un mécanisme d'acquittement, la suppression se fait une fois les données acquittées.

Dans un mode de réalisation, la durée de la quatrième phase 204 du procédé selon l'invention est variable. Le satellite peut alors transmettre à la station sol l'ensemble des données mémorisées, sous réserve que cela soit compatible avec la durée en visibilité des deux éléments. Dans un autre mode de réalisation, la durée de la quatrième phase 204 du procédé selon l'invention est fixe. Dans ce cas, le satellite transfère à la station sol une quantité de données limitée par la durée allouée et le débit de la liaison, de préférence les données les plus anciennes.

Le procédé de collecte de données selon l'invention, qui met en place un plan de contrôle pour des transmissions à la demande avec les balises et éventuellement les stations sol, présente de nombreux avantages par rapport à l'état de la technique :
- il ne sollicite pas les balises n'ayant pas d'informations à transmettre, ce qui leur permet d'économiser leurs batteries ;
- il permet au satellite d'utiliser un faisceau antennaire directif pour recevoir les données transmises par les balises et envoyer les données aux stations sol. Cela a pour effet de favoriser le bilan de liaison, et donc d'améliorer les débits et l'efficacité spectrale des transmissions lorsque les équipements le permettent, et donc d'améliorer la qualité des transmissions et la disponibilité des ressources, et de réduire les durées d'émission des balises ;
- il permet d'organiser les transmissions des différents équipements du réseau, et de les multiplexer temporellement ou fréquentiellement, ce qui supprime les collisions entre les transmissions, évite les retransmissions inhérentes aux techniques d'accès aléatoires, garantit l'accès aux ressources et permet d'augmenter le nombre d'équipements du système de communications ;
- il tient compte de la durée en visibilité des équipements, compte tenu de leur position et le cas échéant de leur déplacement, de manière à orienter toujours au mieux le faisceau de l'antenne satellitaire ;
- il permet d'organiser les transmissions en fonction du niveau de priorité des informations contenues ;
- il permet d'interdire l'accès aux ressources aux équipements non-enregistrés, et de réduire les interférences éventuelles causées par ces équipements ;
- il est compatible d'un mécanisme d'acquittement des paquets transmis ;
- il ne s'appuie pas sur des éphémérides à la précision limitée sur la durée ;
- il est assez simple à mettre en œuvre, et ne nécessite que peu d'échanges de signalisation entre les différents équipements.

Le procédé selon l'invention répond donc bien au besoin technique énoncé.

L'invention porte également sur un système de communications radiofréquence dans son ensemble, comprenant au moins une balise (310, 311, 312, 314, 315) configurée pour acquérir des données et au moins une plateforme spatiale ou aéroportée (301), telle qu'un satellite ou un avion ayant un faisceau antennaire dont la largeur et l'orientation sont adaptables et comprenant des moyens de mémorisation de données. Il peut également comprendre une ou plusieurs stations sol (320) de collecte de données. Les différents éléments du système comprennent les moyens de calcul permettant la mise en œuvre des différentes étapes du procédé de collecte des données selon un mode de réalisation de l'invention.

## Revendications

1. Procédé de collecte de données dans un système de communications radiofréquences comprenant :
- au moins une plateforme spatiale ou aéroportée (301) connaissant sa position, configurée pour transmettre avec un faisceau antennaire dont la largeur et l'orientation sont adaptables, et comprenant des moyens de mémorisation de données, et
- au moins une balise (310, 311, 312, 314, 315) configurée pour acquérir des données, la position de chaque balise étant connue d'au moins un parmi ladite balise et la plateforme spatiale ou aéroportée,
le procédé étant **caractérisé en ce qu'**il comprend :
- une première étape (201) au cours de laquelle la plateforme émet un signal d'activation avec un faisceau antennaire faiblement directif (110), auquel chaque balise souhaitant transmettre des données répond par une requête d'accès comprenant un identifiant,
- une deuxième étape (202) de génération d'une table comprenant, pour chaque équipement ayant transmis une requête d'accès, une durée de visibilité par le dispositif de transmission, une bande de fréquence et une durée de transmission,
- une troisième étape (203) de définition, à partir de la table générée lors de la deuxième étape (202), d'un plan de contrôle planifiant le séquencement des transmissions des équipements ayant émis une requête d'accès et les associant à des configurations de faisceau antennaire directif de la plateforme, et
- une quatrième étape (204) comprenant :
o la transmission, aux équipements ayant émis une requête d'accès, d'une information leur permettant de connaitre les instants auxquels ils peuvent transmettre, et
o l'orientation d'un faisceau antennaire directif (111, 112, 113) de la plateforme vers une ou plusieurs balises, l'envoi de données depuis lesdites une ou plusieurs balises vers la plateforme, et la mémorisation des données reçues par la plateforme, selon l'ordre et les configurations de faisceau antennaire définis par le plan de contrôle.

2. Procédé de collecte de données selon la revendication 1, comprenant en outre au moins une station sol (320) de collecte de données, dans lequel :
- la première étape (201) comprend en outre la transmission d'une requête d'accès comprenant un identifiant par chaque station sol recevant le signal d'activation, et
- lorsqu'une station sol (320) transmet une requête d'accès pendant la première étape (201) du procédé, la quatrième étape (204) comprend en outre le transfert des données mémorisées par la plateforme (301) vers la station sol avec un faisceau antennaire directif.

3. Procédé de collecte de données selon la revendication 1, comprenant en outre au moins une station sol (320) de collecte de données, le procédé comprenant en outre une étape de transmission des données mémorisées par la plateforme vers la station sol par une liaison dédiée.

4. Procédé de collecte de données selon l'une des revendications précédentes, dans lequel la requête d'accès émise par une balise lors de la première étape (201) comprend en outre une position de la balise et au moins un parmi : une quantité de données à transmettre, un horodatage associé à ladite position, un niveau de priorité, un historique des positions de la balise et un indicateur de mécanisme d'acquittement.

5. Procédé de collecte de données selon l'une des revendications précédentes, dans lequel la requête d'accès émise lors de la première étape (201) est modulée selon une technique d'étalement de spectre par répartition en code.

6. Procédé de collecte de données selon l'une des revendications précédentes, dans lequel la table générée lors de la deuxième étape (202) comprend en outre au moins un parmi : un niveau de priorité, un vecteur vitesse, une quantité de données à transmettre, un schéma de modulation et de codage, un débit et un indicateur de mécanisme d'acquittement.

7. Procédé de collecte de données selon l'une des revendications précédentes, dans lequel le plan de contrôle généré lors de la troisième étape (203) comprend en outre au moins un parmi : un nombre d'équipements associés à chaque configuration de faisceau antennaire directif, un ordre de service, une durée allouée, une bande de fréquence allouée, un schéma de modulation et de codage, et un indicateur de mécanisme d'acquittement.

8. Procédé de collecte de données selon l'une des revendications précédentes, dans lequel les trois premières étapes (201, 202, 203) sont répétées séquentiellement et dans lequel la quatrième étape (204) est mise en œuvre en parallèle des trois premières étapes.

9. Procédé de collecte de données selon l'une des revendications 1 à 7, dans lequel les quatre étapes (201, 202, 203, 204) sont répétées séquentiellement.

10. Système de communications radiofréquence comprenant :
- au moins une plateforme spatiale ou aéroportée (301) connaissant sa position, configurée pour transmettre avec un faisceau antennaire dont la largeur et l'orientation sont adaptables et comprenant des moyens de mémorisation de données, et
- au moins une balise (310, 311, 312, 314, 315) configurée pour acquérir des données, la position de chaque balise étant connue d'au moins un parmi ladite balise et la plateforme spatiale ou aéroportée,
les éléments du système de communications étant configurés pour mettre en œuvre un procédé de collecte de données selon l'une des revendications 1 à 9.

11. Système de communications radiofréquence selon la revendication 10, comprenant en outre au moins une station sol (320) de collecte de données.

12. Système de communications radiofréquence selon l'une des revendications 10 et 11, dans lequel la plateforme (301) comprend une antenne active ou une antenne orientable mécaniquement dont la largeur du faisceau est ajustable ou une première antenne à faisceau faiblement directif et une deuxième antenne à faisceau directif orientable mécaniquement.

## Patentansprüche

1. Datensammelverfahren in einem Hochfrequenz-Kommunikationssystem, Folgendes umfassend:
- mindestens eine Raum- oder Luftplattform (301), die ihre Position kennt und die dafür konfiguriert ist, mit einem Antennenstrahl zu übertragen, dessen Breite und Ausrichtung anpassbar sind, und die Datenspeichermittel umfasst, und
- mindestens eine Bake (310, 311, 312, 314, 315), die dafür konfiguriert ist, Daten zu erfassen, wobei die Position jeder Bake mindestens einem von der Bake und der Raum- oder Luftplattform bekannt ist,
wobei das Verfahren **dadurch gekennzeichnet ist, dass** es Folgendes umfasst:
- einen ersten Schritt (201), in dem die Plattform ein Aktivierungssignal mit einem schwach gerichteten Antennenstrahl (110) ausstrahlt, auf welches jede Bake, die Daten übertragen möchte, mit einer Zugriffsanforderung antwortet, die eine Kennung umfasst,
- einen zweiten Schritt (202) des Erzeugens einer Tabelle, die für jede Ausrüstung, die eine Zugriffsanforderung übertragen hat, eine Sichtbarkeitsdauer für die Übertragungsvorrichtung, einen Frequenzbereich und eine Übertragungsdauer umfasst,
- einen dritten Schritt (203) des Definierens, anhand der im zweiten Schritt (202) erzeugten Tabelle, eines Steuerplans, der die Sequentialisierung der Übertragungen der Ausrüstungen, die eine Zugriffsanforderung ausgestrahlt haben, plant und diese Richtantennenstrahlkonfigurationen der Plattform zuordnet, und
- einen vierten Schritt (204), Folgendes umfassend:
o Übertragen an die Ausrüstungen, die eine Zugriffsanforderung ausgestrahlt haben, einer Information, durch die diese die Zeitpunkte erkennen können, zu denen sie übertragen können, und
o Ausrichten eines Richtantennenstrahls (111, 112, 113) von der Plattform zu einer oder mehreren Baken, Senden von Daten von der einen oder den mehreren Baken zu der Plattform und Speichern der von der Plattform empfangenen Daten gemäß der Reihenfolge und Konfigurationen des Antennenstrahls, die durch den Steuerplan definiert sind.

2. Datensammelverfahren nach Anspruch 1, ferner umfassend mindestens eine Datensammel-Bodenstation (320), wobei:
- der erste Schritt (201) ferner die Übertragung einer eine Kennung umfassenden Zugriffsanforderung durch jede Bodenstation umfasst, die das Aktivierungssignal empfängt, und
- wenn eine Bodenstation (320) während des ersten Schritts (201) des Verfahrens eine Zugriffsanforderung überträgt, der vierte Schritt (204) ferner den Transfer der von der Plattform (301) gespeicherten Daten zu der Bodenstation mit einem Richtantennenstrahl umfasst.

3. Datensammelverfahren nach Anspruch 1, ferner umfassend mindestens eine Datensammel-Bodenstation (320), wobei das Verfahren ferner einen Schritt des Übertragens der von der Plattform gespeicherten Daten zu der Bodenstation über eine dedizierte Verbindung umfasst.

4. Verfahren zum Datensammeln nach einem der vorhergehenden Ansprüche, wobei die von einer Bake im ersten Schritt (201) ausgestrahlte Zugriffsanforderung ferner eine Position der Bake sowie mindestens eines der Folgenden umfasst: eine zu übertragende Datenmenge, einen der Position zugeordneten Zeitstempel, eine Dringlichkeitsstufe, einen Verlauf der Positionen der Bake und einen Quittierungsmechanismusanzeiger.

5. Verfahren zum Datensammeln nach einem der vorhergehenden Ansprüche, wobei die in dem ersten Schritt (201) ausgestrahlte Zugriffsanforderung gemäß einer Codemultiplex-Spread-Spektrum-Technik moduliert wird.

6. Verfahren zum Datensammeln nach einem der vorhergehenden Ansprüche, wobei die in dem zweiten Schritt (202) erzeugte Tabelle ferner mindestens eines der Folgenden umfasst: eine Dringlichkeitsstufe, einen Geschwindigkeitsvektor, eine zu übertragende Datenmenge, ein Modulations- und Codierungsschema, einen Durchsatz und einen Quittierungsmechanismusanzeiger.

7. Verfahren zum Datensammeln nach einem der vorhergehenden Ansprüche, wobei der in dem dritten Schritt (203) erzeugte Steuerplan ferner mindestens eines der Folgenden umfasst: eine Anzahl von jeder Richtantennenstrahlkonfiguration zugeordneten Ausrüstungen, eine Dienstanweisung, eine zugewiesene Dauer, einen zugewiesenen Frequenzbereich, ein Modulations- und Codierungsschema und einen Quittierungsmechanismusanzeiger.

8. Verfahren zum Datensammeln nach einem der vorhergehenden Ansprüche, wobei die drei ersten Schritte (201, 202, 203) sequentiell wiederholt werden und wobei der vierte Schritt (204) parallel zu den drei ersten Schritten ausgeführt wird.

9. Datensammelverfahren nach einem der Ansprüche 1 bis 7, wobei die vier Schritte (201, 202, 203, 204) sequentiell wiederholt werden.

10. Hochfrequenz-Kommunikationssystem, Folgendes umfassend:
- mindestens eine Raum- oder Luftplattform (301), die ihre Position kennt und die dafür konfiguriert ist, mit einem Antennenstrahl zu übertragen, dessen Breite und Ausrichtung anpassbar sind, und die Datenspeichermittel umfasst, und
- mindestens eine Bake (310, 311, 312, 314, 315), die dafür konfiguriert ist, Daten zu erfassen, wobei die Position jeder Bake mindestens einem von der Bake und der Raum- oder Luftplattform bekannt ist,
wobei die Elemente des Kommunikationssystems dafür konfiguriert sind, ein Datensammelverfahren nach einem der Ansprüche 1 bis 9 auszuführen.

11. Hochfrequenz-Kommunikationssystem nach Anspruch 10, ferner umfassend mindestens eine Datensammel-Bodenstation (320).

12. Hochfrequenz-Kommunikationssystem nach einem der Ansprüche 10 und 11, wobei die Plattform (301) eine aktive Antenne oder eine mechanisch ausrichtbare Antenne, deren Strahlbreite einstellbar ist, oder eine erste Antenne mit einem schwachen gerichteten Strahl und eine zweite Antenne mit einem mechanisch ausrichtbaren Richtstrahl umfasst.

## Claims

1. Data collection method for collecting data in a radiofrequency communication system comprising:
- at least one space or airborne platform (301) that knows its position, configured so as to transmit with an antenna beam whose width and orientation are adaptable, and comprising data storage means, and
- at least one beacon (310, 311, 312, 314, 315) configured so as to acquire data, the position of each beacon being known to at least one of said beacon and the space or airborne platform,
the method being **characterized in that** it comprises:
- a first step (201) in which the platform emits an activation signal with a low directional antenna beam (110), to which each beacon wishing to transmit data responds with an access request comprising an identifier,
- a second step (202) of generating a table comprising, for each item of equipment that transmitted an access request, a duration of visibility to the transmission device, a frequency band and a transmission duration,
- a third step (203) of defining, based on the table generated in the second step (202), a control plan scheduling the sequencing of the transmissions of the items of equipment that emitted an access request and associating them with directional antenna beam configurations of the platform, and
- a fourth step (204) comprising:
o transmitting, to the items of equipment that emitted an access request, an item of information allowing them to ascertain the times at which they can transmit, and
∘ orienting a directional antenna beam (111, 112, 113) from the platform to one or more beacons, sending data from said one or more beacons to the platform, and storing the data received by the platform, in the order and according to the antenna beam configurations defined by the control plan.

2. Data collection method according to Claim 1, further comprising at least one data collection ground station (320), wherein:
- the first step (201) further comprises transmission of an access request comprising an identifier by each ground station receiving the activation signal, and
- when a ground station (320) transmits an access request during the first step (201) of the method, the fourth step (204) further comprises transferring the data stored by the platform (301) to the ground station with a directional antenna beam.

3. Data collection method according to Claim 1, further comprising at least one data collection ground station (320), the method further comprising a step of transmitting the data stored by the platform to the ground station via a dedicated link.

4. Data collection method according to one of the preceding claims, wherein the access request emitted by a beacon in the first step (201) further comprises a position of the beacon and at least one of: an amount of data to be transmitted, a timestamp associated with said position, a priority level, a history of the positions of the beacon and an acknowledgement mechanism indicator.

5. Data collection method according to one of the preceding claims, wherein the access request emitted in the first step (201) is modulated according to a code-division spread-spectrum technique.

6. Data collection method according to one of the preceding claims, wherein the table generated in the second step (202) further comprises at least one of: a priority level, a velocity vector, an amount of data to be transmitted, a modulation and coding scheme, a throughput and an acknowledgement mechanism indicator.

7. Data collection method according to one of the preceding claims, wherein the control plan generated in the third step (203) further comprises at least one of: a number of items of equipment associated with each directional antenna beam configuration, an order of service, an allocated duration, an allocated frequency band, a modulation and coding scheme, and an acknowledgement mechanism indicator.

8. Data collection method according to one of the preceding claims, wherein the first three steps (201, 202, 203) are repeated sequentially and wherein the fourth step (204) is implemented in parallel with the first three steps.

9. Data collection method according to one of Claims 1 to 7, wherein the four steps (201, 202, 203, 204) are repeated sequentially.

10. Radiofrequency communication system comprising:
- at least one space or airborne platform (301) that knows its position, configured so as to transmit with an antenna beam whose width and orientation are adaptable and comprising data storage means, and
- at least one beacon (310, 311, 312, 314, 315) configured so as to acquire data, the position of each beacon being known to at least one of said beacon and the space platform or airborne platform,
the elements of the communication system being configured so as to implement a data collection method according to one of Claims 1 to 9.

11. Radiofrequency communication system according to Claim 10, further comprising at least one data collection ground station (320).

12. Radiofrequency communication system according to either of Claims 10 and 11, wherein the platform (301) comprises an active antenna or a mechanically orientable antenna whose beam width is adjustable or a first antenna with a low directional beam and a second antenna with a mechanically orientable directional beam.
